Europäisches Patentamt

European Patent Office

Office européen des brevets

(11) Veröffentlichungsnummer: **0 316 660**

**A2**

# EUROPÄISCHE PATENTANMELDUNG

(21) Anmeldenummer: 88118277.8

(22) Anmeldetag: 03.11.88

(51) Int. Cl.⁴ **H04B 9/00**

(30) Priorität: 16.11.87 DE 3738847

(43) Veröffentlichungstag der Anmeldung:
24.05.89 Patentblatt 89/21

(84) Benannte Vertragsstaaten:
**AT BE CH FR GB IT LI NL**

(71) Anmelder: **TELENORMA Telefonbau und Normalzeit GmbH**
**Mainzer Landstrasse 128-146**
**D-6000 Frankfurt am Main(DE)**

(72) Erfinder: **Weber, Jens, Dr.-Ing.**
**Robert-Stolz-Strasse 116**
**D-6232 Bad Soden(DE)**
Erfinder: **Reitz, Erhard, Dipl.-Ing.**
**Hasengasse 1**
**D-6368 Bad Vilbel(DE)**
Erfinder: **Freitag, Otmar, Dipl.-Ing.**
**Mozartstrasse 7**
**D-6369 Nidderau 1(DE)**

(54) **Glasfaser-Übertragungssystem.**

(57) Bei bekannten Glasfaser-Übertragungssystemen mit einer Vielzahl von Stationen weist jede Station eine Sendeeinrichtung auf, in welcher das ankommende Signal verstärkt weitergegeben wird. Bei Ausfall der Station fehlt die über einen Verzweiger eingespeiste Energie des aufgefrischten Signals, so daß bei mehreren hintereinanderliegenden ausgefallenen Stationen das optische Signal zu stark gedämpft wird.

Es werden zwei gegengerichtet betriebene Glasfaser-Übertragungsleitungen vorgesehen, bei welchen am einen Ende eine von einem Zeitrahmengenerator gesteuerte Sendeeinrichtung angeschlossen ist, dabei weisen die freien Zeitplätze ein optisches Dauersignal auf, welches durch den Sender einer Station modulierbar ist, zur Aussendung einer Information werden beide Glasfaser-Übertragungsleitungen benutzt.

Das Glasfaser-Übertragungssystem dient zur sicheren Übermittlung von Nachrichten zwischen Stationen, wobei auch bei einer Unterbrechung der Glasfaser-Übertragungsleitung ein sicherer Betrieb gewährleistet wird.

Fig. 1

# Glasfaser-Übertragungssystem

Die Erfindung betrifft ein Glasfaser-Übertragungssystem mit einer Vielzahl von Stationen mit jeweils, über einen, an der Glasfaser-Übertragungsleitung angeschlossenen optischen Verzweiger verbundenen Empfänger, welcher die optischen Signale in elektrische Signale umsetzt, wobei Zeitplätze zur Übermittlung der Informationen dienen, und durch eine Station durch einen individuellen Sender Signale aussendbar sind.

Ein derartiges Glasfaser-Übertragungssystem ist bereits bekannt, so wird in der DE-PS 30 07 958 ein opto-elektronisches Übertragungssystem beschrieben, bei welchem jede Station zwei optische Verzweiger aufweist, und an dem einen Verzweiger ein opto-elektronischer Wandler als Empfänger und an dem anderen Verzweiger ein opto-elektronischer Wandler als Sender angeschlossen ist. Jede Station wird derart betrieben, daß die auf der Glasfaserstrecke ankommenden Signale empfangen und regeneriert auf die Glasfaserstecke weitergegeben werden. Nur bei Ausfall einer Station werden Empfänger und Sender abgeschaltet, die Signale passieren die Station auf dem durchgehenden Glasfaserstrang.

Das beschriebene Übertragungssystem hat zwar den Vorteil, daß beliebig viele Stationen in die optische Übertragungsstrecke eingefügt werden können, ohne daß dabei Dämpfungsverluste auftreten, da in jeder Station eine Regeneration der übertragenen Signale stattfindet, nachteilig ist jedoch, daß bei Ausfall mehrerer hintereinanderliegender Stationen die Dämpfung des übertragenen Signals so stark wird, daß eine Auswertung durch einen Empfänger nicht mehr gegeben ist.

Die Aufgabe der Erfindung besteht nun darin, ein Glasfaser-Übertragungssystem der eingangs genannten Art derart auszugestalten, daß die Betriebssicherheit erhöht und der Aufwand in den Stationen in Grenzen gehalten wird.

Diese Aufgabe wird dadurch gelöst, daß zwei gegengerichtet betriebene Glasfaser-Übertragungsleitungen vorgesehen sind, daß am einen Ende jeder der beiden Leitungen eine von einem Zeitrahmengenerator gesteuerte Sendeeinrichtung angeschlossen ist, daß freie Zeitplätze ein optisches Dauersignal aufweisen, welches durch den Sender einer Station modulierbar ist und daß zur Aussendung einer Information beide Glasfaser-Übertragungsleitungen benutzt werden.

Durch die Verwendung zweier gegengerichteter Glasfaser-Übertragungsleitungen und die Aussendung einer für eine andere Station bestimmten Nachricht auf beide Glasfaser-Übertragungsleitungen wird ein Ring-Betrieb des Übertragungssystems vermieden. Durch die gleichzeitige Aussendung in beiden Übertragungsrichtungen wird sichergestellt, daß die jeweilige Station, für die die Nachricht bestimmt ist, erreicht wird. Hierdurch ist es auch möglich, die Stationen, die durch eine stationsindividuelle Kennung in der jeweiligen Nachricht gekennzeichnet sind, beliebig in der Übertragungsstrecke anzuordnen und auch den Anschlußplatz zu verändern.

Eine Weiterbildung der Erfindung besteht darin, daß am anderen Ende jeder Glasfaser-Übertragungsleitung eine Empfangseinrichtung angeschlossen ist, welche die ankommenden optischen Signale in elektrische Signale umsetzt, daß die in den Zeitplätzen ankommenden Informationen in einem Pufferspeicher zwischengespeichert und anschließend durch die betreffende Sendeeinrichtung der gleichen Glasfaser-Übertragungsleitung wieder ausgesendet werden. Diese Maßnahme dient zur Aufrechterhaltung des Betriebes bei einer Unterbrechung einer oder auch beider Glasfaser-Übertragungsleitungen.

Hierzu weist jede Station einen Hilfssender auf, welcher über optische Schaltmittel vor dem Sender der Station an die Glasfaser-Übertragungsleitung anschaltbar ist.

Dieser Hilfssender tritt anstelle der am Anfang der Glasfaser-Übertragungsleitung befindlichen Sendeeinrichtung, die infolge der Unterbrechung der Glasfaser-Übertragungsleitung in der betreffenden Station nicht mehr wirksam ist.

Weitere Vorteile ergeben sich aus den Unteransprüchen.

Die Erfindung wird anhand eines Ausführungsbeispiels näher erläutert, welches in der Zeichnung dargestellt ist.

Es zeigt:

Fig. 1 das Blockschaltbild eines Glasfaser-Übertragungssystems,

Fig. 2 das Blockschaltbild einer Station eines Glasfaser-Übertragungssystems und

Fig. 3 das Blockschaltbild der zentralen Einrichtungen eines Glasfaser-Übertragungssystems.

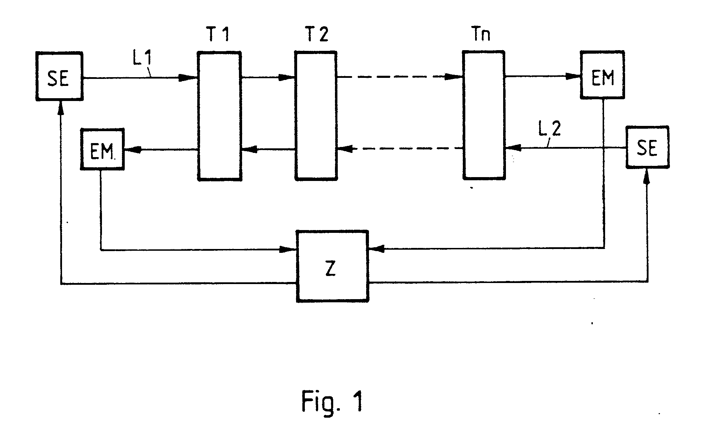

Gemäß Fig. 1 ist an zwei Glasfaser-Übertragungsleitungen L1 und L2 eine Vielzahl von Stationen T1, T2 bis Tn angeschlossen, wobei die beiden Glasfaser-Übertragungsleitungen L1 und L2 gegengerichtet betrieben werden. Hierzu ist am jeweiligen einen Ende der beiden Glasfaser-Übertragungsleitungen L1 und L2 eine Sendeeinrichtung SE angeschlossen. Eine derartige Sendeeinrichtung SE besteht, wie weiter unten noch näher erläutert, aus einem Laser, welcher von einem Zeitrahmengenerator angesteuert optische Signale auf der Glasfaser-Übertragungsleitung L erzeugt, wobei die einzelnen Zeitplätze durch ein optisches Dauersignal gekennzeichnet sind, welches zur Informationsübertragung von einer Station zu einer anderen Station durch die sendende Station entsprechend der zu übertragenen Information moduliert wird.

Im normalen Betrieb wird jede von einer Station T auszusendende Information auf beide Glasfaser-Übertragungsleitungen ausgesendet, wodurch sichergestellt ist, daß diejenige Station, für welche die Information bestimmt ist, diese auch mit Sicherheit erhält. Am Ende der Glasfaser-Übertragungsleitungen ist jeweils eine Empfangseinrichtung EM angeschlossen, welche die ankommenden optischen Signale in elektrische Signale umwandelt, die einer zentralen Einrichtung Z zugeführt werden. Im normalen Betrieb werden die von der Empfangseinrichtung EM empfangenen Informationen in der zentralen Einrichtung Z auf das Vorliegen einer bestimmten Meldung überwacht.

Es wird nun davon ausgegangen, daß die Verbindung zwischen den Stationen T1 und T2 unterbrochen ist, so daß die in den jeweiligen Stationen in der betreffenden Richtung liegenden Empfänger kein Signal auf der Glasfaser-Übertragungsleitung L empfangen. In diesem Fall werden in beiden Stationen die auf der ankommenden Glasfaser-Übertragungsleitung ankommenden Informationen auf die abgehende Glasfaser-Übertragungsleitung wieder ausgesendet. Außerdem senden beide Stationen eine Meldung aus, die von der jeweiligen Empfangseinrichtung EM aufgenommen und an die zentrale Einrichtung Z weitergereicht wird. Aus der Meldung geht hervor, daß eine Unterbrechung der Glasfaser-Übertragungsleitung L stattgefunden hat und ein Hinweis auf die betreffende Station T. Hierauf werden sämtliche in der Empfangsrichtung EM eintreffenden Informationen von der zentralen Einrichtung Z auf die Sendeeinrichtung SE der gleichen Glasfaser-Übertragungsleitung L weitergeleitet. Auf diese Weise wird der Betrieb auf dem Glasfaser-Übertragungssystem weiterhin aufrechterhalten, außerdem kann anhand der Stations-Kennungen der Ort der Leitungsunterbrechung in der zentralen Einrichtung Z festgestellt werden.

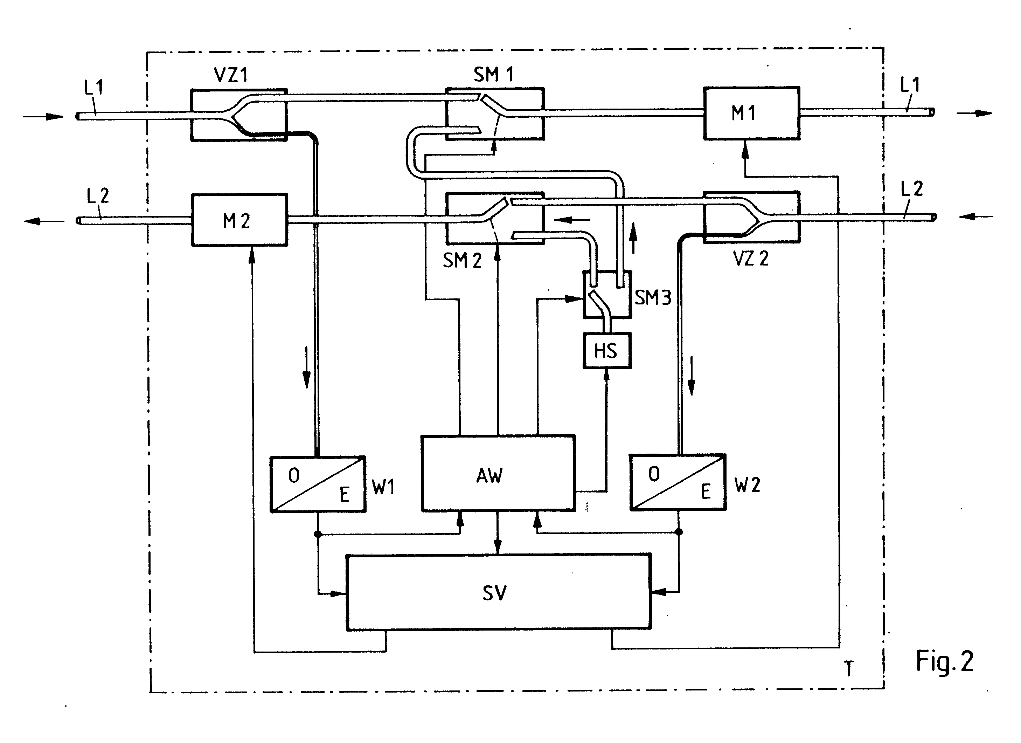

Die Einrichtungen, die in einer Station T benötigt werden, werden anhand des Blockschaltbildes gemäß Fig. 2 in ihrer Funktion erläutert. In jedem Leitungszug des Glasfaser-Übertragungssystems ist zunächst ein Verzweiger V2, daran anschließend ein optisches Schaltmittel SM und schließlich ein Modulator M angeordnet. Der Verzweiger VZ ist dabei derart ausgebildet, daß nur ein Bruchteil des durch die Glasfaser-Übertragungsleitung L übertragenen Lichtstromes abgezweigt und einem optisch-elektrischen Wandler V zugeführt wird. Die abgezweigte Lichtmenge ist dabei derart bemessen, daß diese einerseits noch zur optisch/elektrischen Signalauswertung ausreicht und andererseits in der am Ende der Glasfaser-Übertragungsleitung L angeschlossenen Empfangseinrichtung EM noch eine zur Auswertung der Signale ausreichende Lichtmenge vorhanden ist.

Die Schaltmittel SM sind optische Umschalter, wie sie beispielsweise in der Zeitschrift "Laser-Magazin" 3/87 auf den Seiten 36 bis 41 beschrieben sind. In dem Modulator M erfolgt die Modulation freier Zeitplätze, die, wie bereits erwähnt, als Dauersignal gekennzeichnet sind. Dabei wird das Lichtdauersignal entsprechend dem Signal der zu übertragenden Information durch den Modulator M moduliert. Die Stationen T weisen somit keine Sendeeinrichtung mit einer eigenen Strahlungsquelle für den Normalbetrieb auf, wodurch bei Ausfall einer Station T keine Veränderung an den optischen Übertragungseigenschaften innerhalb einer Station verursacht wird.

Die elektrischen Ausgangssignale der an dem Verzweiger VZ1 bzw. VZ2 angeschlossenen elektrischen/optischen Wandler W1 bzw. W2 werden sowohl einer Signalverarbeitungseinrichtung SV als auch einer Überwachungseinrichtung AW zugeführt. An der Signalverarbeitungseinrichtung SV sind die Ein- und/oder Ausgabegeräte der Station T angeschlossen, beispielsweise Tastaturen, Drucker, Bildschirmgeräte, Fernsprechgeräte, usw.

Sämtliche auf der Glasfaser-Übertragungsleitung L ankommenden Informationen werden von der Signalverarbeitungseinrichtung SV überprüft und diejenigen, für die betreffende Station T bestimmten Informationen den angeschlossenen Geräten zugeführt. Die von diesen bzw. von der Station auszusendenden Informationen werden von der Signalverarbeitungseinrichtung SV den Modulatoren M1 und M2 zugeführt und jeweils auf einem freien Zeitplatz in beiden Richtungen ausgesendet. Solange es sich nicht um eine Sammelverbindung handelt, wird die Station, für welche die Information bestimmt ist, über die eine Glasfaser-Übertragungsleitung L1 erreicht, während die Information auf der zweiten Glasfaser-Übertragungsleitung L praktisch bezüglich einer Station T ins Leere geht und nur von der Empfangseinrichtung EM (Fig. 1) aufgenommen wird, wie dies auch bei der anderen Glasfaser-Übertragungsleitung der Fall ist. Eine Auswertung an zentraler Stelle (Z) ist bei dieser Betriebsweise nicht unbedingt notwendig.

Im normalen Betrieb nehmen die Schalter der Schaltmittel SM1 und SM2 diejenige Position ein, in welcher sie in der Fig. 2 dargestellt sind. Mit Hilfe der Auswerteeinrichtung AW, welcher, wie bereits erwähnt, die elektrischen Ausgangssignale der Wandler W1 und W2 ebenfalls zugeführt werden, erfolgt eine Auswertung bezüglich des Vorhandenseins des Lichtstroms in der Glasfaser-Übertragungsleitung L1 und L2. Sobald dieser ausbleibt, d.

h. eine Unterbrechung einer oder beider Glasfaser-Übertragungsleitungen aufgetreten ist, erfolgt eine Betätigung der Schaltmittel SM auf Veranlassung der Auswerteeinrichtung AW.

Es wird nun davon ausgegangen, daß der optisch/elektrische Wandler W1 kein Signal mehr liefert, d. h. die Glasfaser-Übertragungsleitung L1 vor der Station T unterbrochen ist. In diesem Fall wird das Schaltmittel SM1 umgeschaltet und das Schaltmittel SM3 auf den Eingang des Schaltmittels SM1 geschaltet, so daß der Hilfssender HS an die Glasfaser-Übertragungsleitung L1 angeschaltet ist. Der Hilfssender HS wird durch die auf der Glasfaser-Übertragungsleitung L2 ankommenden Zeitrahmensignale synchronisiert und tritt jetzt in seiner Funktion anstelle der an der unterbrochenen Glasfaser-Übertragungsleitung L1 angeschlossenen Sendeeinrichtung SE. Zur Vereinfachung des Aufbaus des Hilfssenders HS kann auch dieser derart ausgestaltet sein, daß nur ein optisches Dauersignal durch denselben erzeugt wird, welches dann mit Hilfe des Modulators M1 zur Erzeugung der entsprechenden Zeitrahmensignale moduliert wird. Die Aussendung der eigenen Informationen der betreffenden Station T erfolgt in bereits beschriebener Weise über den Modulator MI.

Gleichzeitig wurde auch das Schaltmittel SM2 betätigt, so daß die Weitergabe der Informationen auf dem elektrischen Weg auf der Glasfaser-Übertragungsleitung L2 unterbrochen wurde. Mit der Umschaltung der Schaltmittel SM wurde auch eine Meldung in der bereits beschriebenen Weise für die zentrale Einrichtung Z (s. Fig. 1) abgesetzt, um die vollzogene Umschaltung zu kennzeichnen. In der auf der anderen Seite der Unterbrechungsstelle liegenden Station T laufen die bereits beschriebenen Vorgänge in gleicher Weise ab, der Unterschied besteht nur darin, daß der dortige Hilfssender HS an den Eingang des umgeschalteten Schaltmittels SM2 mit Hilfe des Schaltmittels SM3 angeschaltet wird.

Sobald die Unterbrechungsstelle des Glasfaser-Übertragungssystems wieder hergestellt ist, werden in den Stationen T aufgrund des Vorliegens von Lichtstrom auf Veranlassung der Auswerteeinrichtung die Schaltmittel SM wieder in ihre ursprüngliche Lage zurückgeschaltet. Außerdem erhält die zentrale Einrichtung Z eine Meldung über die Wiederherstellung des normalen Betriebes.

Es wird noch darauf hingewiesen, daß die Funktion der Auswerteeinrichtung AW bezüglich der Signalüberwachung und der Steuerung der Schaltmittel SM1 auch von einer entsprechend ausgestatteten Signalverarbeitungseinrichtung SV wahrgenommen werden können.

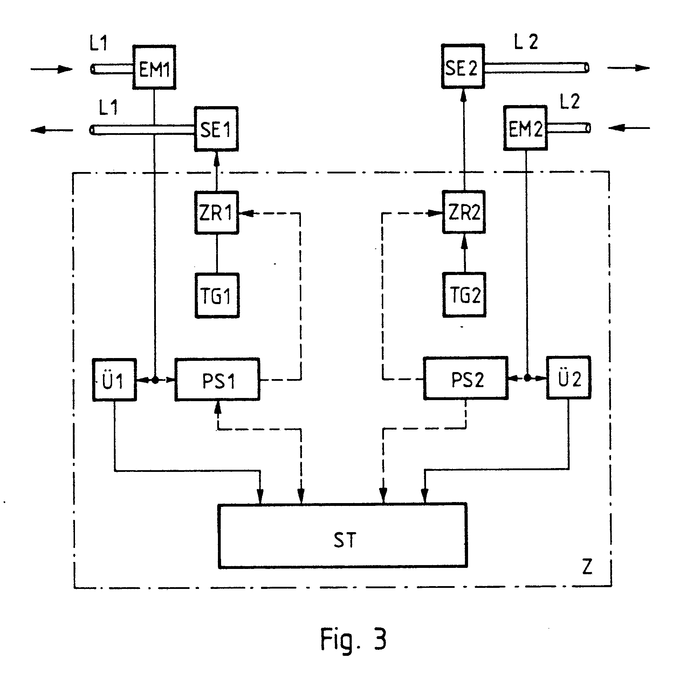

Der Aufbau und die Wirkungsweise der zentralen Einrichtungen wird anhand des Blockschaltbildes gemäß Fig. 3 erläutert. Am Anfang der Glasfaser-Übertragungsleitungen L1 und L2 ist eine Sendeeinrichtung SE1 bzw. SE2 angeschlossen. Diese besteht jeweils aus einem Laser, der von einem Taktgenerator TG1 bzw. TG2 gesteuerten Zeitrahmengenerator ZR1 bzw. ZR2 gesteuert wird. Im Normalbetrieb werden von den Sendeeinrichtungen SE Zeitrahmeninformationen und Zeitplätze ausgesendet, wobei die letzteren durch ein Dauersignal gekennzeichnet werden, welches, wie bereits beschrieben, in den Stationen T entsprechend einer auszusendenden Information moduliert werden kann.

Am Ende der Glasfaser-Übertragungsleitungen ist jeweils eine Empfangseinrichtung EMI bzw. EM2 angeschlossen. Diese wandelt die ankommenden Lichtsignale in elektrische Signale um, die von einer Überwachungseinrichtung Ü1 bzw. Ü2 überwacht werden. Die Aufgabe der Überwachungseinrichtungen Ü bestehen darin, die auf den Glasfaser-Übertragungsleitungen L1 und L2 ankommenden Informationen auf das Vorliegen einer Umschaltemeldung einer Station T zu überwachen, die, wie bereits erwähnt, bei einer Unterbrechung der Glasfaser-Übertragungsleitung von den unmittelbar betroffenen Stationen ausgesendet werden.

In einem solchen Fall wird in der betreffenden Überwachungseinrichtung Ü eine entsprechende Meldung erzeugt und an die Steuereinrichtung ST gesendet, die darauf hin einen Zwischenspeicher PS freigibt, in welchen sämtliche in der Empfangseinrichtung EM eintreffenden Informationen nach deren Umwandlung in elektrische Signale zwischengespeichert und anschließend dem Zeitrahmengenerator ZR zur Aussendung auf die gleiche Glasfaser-Übertragungsleitung durch die Sendeeinrichtung SE übermittelt werden. Der Zwischenspeicher PS dient zum Laufzeitausgleich. Anhand von den betroffenen Stationen T ausgesendeten Meldungen kann in der Steuereinrichtung ST der Ort der Unterbrechung der Glasfaser-Übertragungsleitung festgestellt und eine entsprechende Anzeigeinformation für einen Lampentableau oder einen Bildschirm erzeugt werden.

Sobald die Übertragungsstrecke wieder hergestellt ist, wird dies wiederum durch entsprechende Meldungen der betroffenen Stationen T der zentralen Einrichtung Z mitgeteilt, die darauf hin den Zwischenspeicher PS wieder abschaltet, so daß die Aufgabe der zentralen Einrichtung Z auf die Erzeugung des Lichtstromes und der Zeitrahmensignale und die Überwachung auf Unterbrechungsmeldungen beschränkt bleibt.

Da die beiden, der Unterbrechungsstelle benachbarten Stationen T die anhand von Fig. 2 erläuterte Umschaltung durchführen, wird auch an zentraler Stelle der auf der Glasfaser-Übertragungsleitung ankommende Informationsfluß wieder abgehend auf dieselbe weitergegeben. Dies gilt für beide Glasfaser-Übertragungsleitungen.

Es wird noch darauf hingewiesen, daß die Verzweiger VZ, die Sender M und die Schalter SM vorteilhaft als gemeinsamer integrierter Schaltkreis ausgebildet sein können, dabei kann der Verzweiger VZ für den Wandler W auszukoppelnden Lichtanteil in einem Regelkreis integriert sein, wobei das Aufteilungsverhältnis der Lichtmenge im Verzweiger VZ im Hinblick auf eine minimal erforderliche Empfangsleistung für den Wandler W optimiert wird.

## Ansprüche

1. Glasfaser-Übertragungssystem mit einer Vielzahl von Stationen mit jeweils einem, über einen, an der Glasfaser-Übertragungsleitung angeschlossenen optischen Verzweiger verbundenen Empfänger, welcher die optischen Signale in elektrische Signale umsetzt, wobei Zeitplätze zur Übermittlung der Informationen dienen, und durch eine Station durch einen individuellen Sender Signale aussendbar sind,
dadurch gekennzeichnet,
daß zwei gegengerichtet betriebene Glasfaser-Übertragungsleitungen (L1, L2) vorgesehen sind, daß an einem Ende jeder der beiden Leitungen eine von einem Zeitrahmengenerator (ZR) gesteuerte Sendeeinrichtung (SE) angeschlossen ist, daß freie Zeitplätze ein optisches Dauersignal aufweisen, welches durch den Sender (n) einer Station modulierbar ist und daß zur Aussendung einer Information beide Glasfaser-Übertragungsleitungen (L1, L2) benutzt werden.

2. Glasfaser-Übertragungssystem nach Anspruch 1,
dadurch gekennzeichnet,
daß die Sendeeinrichtung (SE) als Laser ausgebildet ist.

3. Glasfaser-Übertragungssystem nach einem der Ansprüche 1 oder 2,
dadurch gekennzeichnet,
daß in den optischen Verzweigern (VZ) eine unsymmetrische Leistungsaufteilung erfolgt, wobei der kleinere Teil der Leistung dem Empfänger (E) zugeführt wird.

4. Glasfaser-Übertragungssystem nach einem der Ansprüche 1 bis 3,
dadurch gekennzeichnet,
daß am anderen Ende jeder Glasfaser-Übertragungsleitung (L1, L2) eine Empfangseinrichtung (EM) angeschlossen ist, welche die ankommenden optischen Signale in elektrische Signale umsetzt, daß die in den Zeitplätzen ankommenden Informationen in einem Pufferspeicher (PS) zwischengespeichert und anschließend durch die betreffende Sendeeinrichtung (SE) der gleichen Glasfaser-Übertragungsleitung wieder ausgesendet werden.

5. Glasfaser-Übertragungssystem nach einem der Ansprüche 1 bis 4,
dadurch gekennzeichnet,
daß jede Station (T1 bis Tn) einen Hilfssender (HS) aufweist, welcher über optische Schaltmittel (SM1 bis SM3) vor den Sender (M) der Station (T) an die Glasfaser-Übertragungsleitung (L) anschaltbar ist.

6. Glasfaser-Übertragungssystem nach Anspruch 5,
dadurch gekennzeichnet,
daß im eingeschalteten Zustand des Hilfssenders (HS) dieser von einem Zeitrahmengenerator gesteuert wird, wobei freie Zeitplätze ein optisches Dauersignal aufweisen.

7. Glasfaser-Übertragungssystem nach einem der Ansprüch 1 bis 6,
dadurch gekennzeichnet,
daß in jeder Station (T) das Vorhandensein optischer Signale durch eine Auswerteeinrichtung (AW) überwacht wird, welche bei Ausbleiben derselben die Betätigung der Schaltmittel (SM1 bis SM3) veranlaßt.

8. Glasfaser-Übertragungssystem nach Anspruch 7,
dadurch gekennzeichnet,
daß durch die Schaltmittel (SM1 bis SM3) der Hilfssender (HS) an diejenige Glasfaserleitung (L) angeschaltet wird, auf welcher das Ausbleiben der optischen Signale durch die Auswerteeinrichtung (AW) festgestellt wurde.

9. Glasfaser-Übertragungssystem nach Anspruch 5,
dadurch gekennzeichnet,
daß durch den mit dem Hilfssender (HS) in Reihe liegenden Sender (M) der Zeitrahmen erzeugt wird.

10. Glasfaser-Übertragungssystem nach einem der Ansprüche 5 oder 9,
dadurch gekennzeichnet,
daß der Zeitrahmen aus dem Zeitrahmensignal der anderen Übertragungsrichtung abgeleitet wird.

11. Glasfaser-Übertragungssystem nach einem der Ansprüche 7 bis 10,
dadurch gekennzeichnet,
daß nach Betätigung der Schaltmittel (SM1 bis SM3) durch die betreffende Station (T) eine entsprechende Meldung an die Zentrale (Z) gesendet wird.

12. Glasfaser-Übertragungssystem nach einem der Ansprüche 8 bis 10,
dadurch gekennzeichnet,
daß die aus der Gegenrichtung auf der einen Glasfaser-Übertragungsleitung ankommenden Informationen auf die andere Glasfaser-Übertragungsleitung wieder ausgesendet werden.

13. Glasfaser-Übertragungssystem nach Anspruch 3.
dadurch gekennzeichnet,
daß die Verzweiger (VZ), Sender (M) und die optischen Schalter (SM) als ein integrierter optischer Schaltkreis ausgebildet sind.

14. Glasfaser-Übertragungssystem nach einem der vorhergehenden Ansprüche,
dadurch gekennzeichnet,
daß der Verzweiger (VZ) in einem Regelkreis integriert ist, wobei der für den Wandler (W) auszukoppelnde Lichtanteil im Hinblick auf eine minimal erforderliche Empfangsleistung für den Wandler (W) optimiert wird.

Fig. 1

Fig. 2

EP 0 316 660 A2

Fig. 3